(19) Europäisches Patentamt
European Patent Office
Office européen des brevets

(11) EP 2 255 622 A2

(12) # EUROPÄISCHE PATENTANMELDUNG

(43) Veröffentlichungstag:
**01.12.2010 Patentblatt 2010/48**

(51) Int Cl.:
***A01N 41/10*** *(2006.01)* ***A01N 47/36*** *(2006.01)*
***A01P 13/02*** *(2006.01)* *A01N 25/32* *(2006.01)*

(21) Anmeldenummer: **10172994.5**

(22) Anmeldetag: **25.11.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **07.12.2001 DE 10160139**

(62) Dokumentnummer(n) der früheren Anmeldung(en) nach Art. 76 EPÜ:
**09012737.4 / 2 140 761**
**02787803.2 / 1 455 578**

(71) Anmelder: **Bayer CropScience AG**
**40789 Monheim (DE)**

(72) Erfinder:
- **Hacker, Erwin**
  **65239, Hochheim (DE)**
- **Bieringer, Hermann**
  **65817, Eppstein (DE)**
- **Krähmer, Hansjörg**
  **65719, Hofheim (DE)**

Bemerkungen:
Diese Anmeldung ist am 17-08-2010 als Teilanmeldung zu der unter INID-Code 62 erwähnten Anmeldung eingereicht worden.

(54) **Synergistische herbizide Mittel**

(57) Es werden herbizide Mittel enthaltend
A) 2-[2-Chlor-3-(2,2,2-trifluorethoxymethyl)-4-methylsulfonyl-benzoyl]cyclohexan-1,3-dion und
B) triflusulfuron,
gegen monokotyle und/oder dikotyle Schadpflanzen beschrieben.
Diese Mittel weisen eine gegenüber den einzeln angewandten Herbiziden überlegene Wirkung auf.

EP 2 255 622 A2

## Beschreibung

Die Erfindung betrifft das technische Gebiet der Pflanzenschutzmittel, die gegen unerwünschten Pflanzenwuchs eingesetzt werden können und als Wirkstoffe eine Kombination von mindestens zwei Herbiziden enthalten.

Spezieller betrifft sie herbizide Mittel, welche als Wirkstoff ein Herbizid aus der Gruppe der Benzoylcyclohexandione in Kombination mit mindestens einem weiteren Herbizid enthalten.

Herbizide aus der oben genannten Gruppe der Benzoylcyclohexandione sind aus zahlreichen Dokumenten bekannt. So werden beispielsweise in WO 98/29406 und WO 00/21924 Benzoylcyclohexandione mit herbizider Wirkung beschrieben.

Die Anwendung der aus diesen Schriften bekannten Benzoylcyclohexandione ist jedoch in der Praxis häufig mit Nachteilen verbunden. So ist die herbizide Wirksamkeit der bekannten Verbindungen nicht immer ausreichend, oder bei ausreichender herbizider Wirksamkeit werden unerwünschte Schädigungen der Nutzpflanzen beobachtet.

Die Wirksamkeit von Herbiziden hängt unter anderem von der Art des eingesetzten Herbizids, dessen Aufwandmenge, der Zubereitung, den jeweils zu bekämpfenden Schadpflanzen, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen gegenüber einem Wirkstoff, die bei längerer Anwendung oder geographisch begrenzt auftreten können. Solche Veränderungen äußern sich als mehr oder weniger starke Wirkungsverluste und lassen sich nur bedingt durch höhere Aufwandmengen der Herbizide ausgleichen.

Wegen der Vielzahl möglicher Einflußfaktoren gibt es praktisch keinen einzelnen Wirkstoff, der die gewünschten Eigenschaften für unterschiedliche Anforderungen, insbesondere hinsichtlich der Schadpflanzenspezies und der Klimazonen, in sich vereinigt. Dazu kommt die ständige Aufgabe, die Wirkung mit immer geringerer Aufwandmenge an Herbiziden zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine häufig angewandte Methode zur Verbesserung des Anwendungsprofils eines Herbizids besteht in der Kombination des Wirkstoffs mit einem oder mehreren anderen Wirkstoffen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer gemeinsamen Formulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Aus WO 01/28341 A1 sind Kombinationen von Herbiziden aus der Gruppe der Hemmstoffe der Hydroxyphenylpyruvat-Dioxygenase mit zahlreichen weiteren Herbiziden anderer Stoff- und Wirkgruppen bekannt. WO 96/34528 A1 offenbart Mischungen von Triflusulfuron mit Glyphosate. Die dort offenbarten Kombinationen erfüllen hingegen nicht immer die geforderten Kriterien hinsichtlich günstigen Wirkungsprofils, hoher Stabilität und möglichst synergistisch verstärkter Wirkung.

Aufgabe der vorliegenden Erfindung ist die Bereitstellung von herbiziden Mitteln mit gegenüber dem Stand der Technik verbesserten Eigenschaften.

Ein Gegenstand der Erfindung sind herbizide Mittel, gekennzeichnet durch einen wirksamen Gehalt an

A) der Verbindung 2-[2-Chlor-3-(2,2,2-trifluorethoxymethyl)-4-methylsulfonyl-benzoyl]cyclohexan-1,3-dion sowie deren landwirtschaftlich üblichen Salze (Komponente A)
und

B) triflusulfuron (Komponente B),

wobei diese Mittel die Komponente A oder deren Salze und die Verbindung der Gruppe B (Komponente B) in einem Gewichtsverhältnis von 1:2000 bis 2000:1 enthalten.
2-[2-Chlor-3-(2,2,2-trifluorethoxymethyl)-4-methylsulfonyl-benzoyl]cyclohexan-1,3-dion (Komponente A) ist aus WO 00/21924 bekannt. Triflusulfuron ist z.B. aus "The Pesticide Manual" 12. Auflage, 2000, British Crop Protection Council, bekannt.

Tabelle

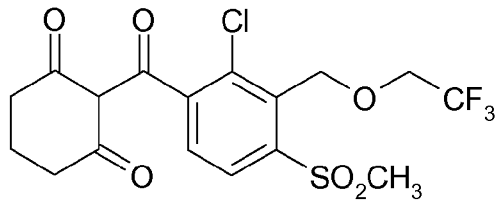

Komponente A

In den erfindungsgemäßen Kombinationen benötigt man in der Regel Aufwandmengen im Bereich von 1 bis 2000 g, vorzugsweise 10 bis 500 g Aktivsubstanz pro Hektar (ai/ha) der Komponente A und 1 bis 2000 g, vorzugsweise 1 bis 500 g der Komponente B.

Die Gewichtsverhältnisse der einzusetzenden Komponenten A zu B können in weiten Bereichen variiert werden. Vorzugsweise ist das Mengenverhältnis im Bereich von 1:50 bis 500:1, insbesondere im Bereich von 1:20 bis 50:1. Optimale Gewichtsverhältnisse können vom jeweiligen Applikationsgebiet, Unkrautspektrum und der eingesetzten Wirkstoffkombination abhängen und in Vorversuchen bestimmt werden.

Die erfindungsgemäßen Mittel lassen sich zur selektiven Bekämpfung von annuellen und perennierenden monokotylen und dikotylen Schadpflanzen in Getreide-(beispielsweise Gerste, Hafer, Roggen, Weizen), Mais- und Reiskulturen sowie in transgenen Nutzpflanzenkulturen oder auf klassischem Wege selektierten Nutzpflanzenkulturen, die gegen die Wirkstoffe A und B resistent sind, einsetzen. Ebenso sind sie zur Bekämpfung unerwünschter Schadpflanzen einsetzbar in Plantagenkulturen wie Ölpalme, Kokospalme, Gummibaum, Zitrus, Ananas, Baumwolle, Kaffee, Kakao, Zuckerrohr u.a. sowie im Obst- und Weinbau. Sie sind besonders gut für die Bekämpfung von mono- und/oder dikotylen Schadpflanzen in Mais und Zuckerrohr geeignet.

Die erfindungsgemäßen Mittel erfassen ein breites Unkrautspektrum. Sie eignen sich beispielsweise zur Bekämpfung von annuellen und perennierenden Schadpflanzen wie beispielsweise aus den Spezies Abutilon, Alopecurus, Avena, Chenopodium, Cynoden, Cyperus, Digitaria, Echinochloa, Elymus, Galium, Ipomoea, Lamium, Matricaria, Scirpus, Setaria, Sorghum, Veronica, Viola und Xanthium.

Die erfindungsgemäßen herbiziden Mittel zeichnen sich auch dadurch aus, daß die in den Kombinationen verwendeten und wirksamen Dosierungen der Komponenten A und B gegenüber einer Einzeldosierung verringert ist, so daß eine Reduzierung der nötigen Aufwandmengen der Wirkstoffe ermöglicht wird.

Gegenstand der Erfindung ist auch ein Verfahren zur Bekämpfung von unerwünschtem Pflanzenwuchs, **dadurch gekennzeichnet, daß** man ein oder mehrere Herbizide A mit einem oder mehreren Herbiziden B auf die Schadpflanzen, Pflanzenteile davon oder die Anbaufläche appliziert.

Bei der gemeinsamen Anwendung von Herbiziden des Typs A und B treten überadditive (= synergistische) Effekte auf. Dabei ist die Wirkung in den Kombinationen stärker als die zu erwartende Summe der Wirkungen der eingesetzten Einzelherbizide und der Wirkung des jeweiligen einzelnen Herbizids A und B. Die synergistischen Effekte erlauben eine Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Diese Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Die erfindungsgemäßen Wirkstoffkombinationen können sowohl als Mischformulierungen der Komponenten A und B, gegebenenfalls mit weiteren üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Komponenten A und B können auf verschiedene Arten formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder

Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London. Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Die erfindungsgemäßen Kombinationen der Komponente A und B verursachen bei ihrer Anwendung oftmals keine oder geringe Schäden an Nutzpflanzen. Um die Schäden an Nutzpflanzen auf ein tolerables Minimum zu senken oder gänzlich zu eliminieren können die erfindungsgemäßen Kombinationen der Komponente A und B auch in einer weiteren bevorzugten Ausführungsform in Mischung mit einem Safener der Formel (I) oder (II)

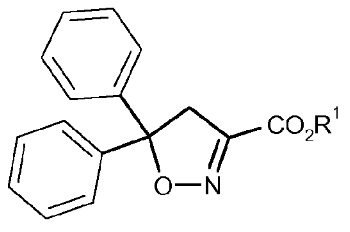

(I)

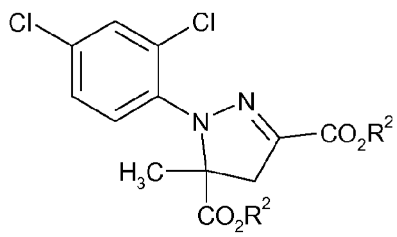

(II)

angewendet werden, worin $R^1$ für Wasserstoff, Methyl oder Ethyl steht, und $R^2$ Methyl oder Ethyl bedeutet. Die Verbindungen der Formel (I) sind aus WO 95/07897 und dort zitierter Literatur bekannt und können nach oder analog den dort beschriebenen Verfahren hergestellt werden. Die Verbindungen der Formel (II) sind aus EP-A 0 635 996 und dort zitierter Literatur bekannt und können nach oder analog den dort beschriebenen Verfahren hergestellt werden. Die beiden zitierten Schriften enthalten ausführliche Angaben zu Herstellungsverfahren und Ausgangsmaterialien. Auf diese Schriften wird ausdrücklich Bezug genommen, sie gelten durch Zitat als Bestandteil dieser Beschreibung.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden

in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, Wirkstoffe der Typen A und B, wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%. Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Komponenten A und B hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele

a) Ein Stäubemittel (WP) wird erhalten, indem man 10 Gew.-Teile eines Wirkstoffs/Wirksstoffgemischs und 90 Gew.-Teile Talkum als Inertstoff mischt und in einer Schlagmühle zerkleinert.

b) Ein in Wasser leicht dispergierbares, benetzbares Pulver (WG) wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (Triton X 207), 3 Gew.-Teilen Isotridecanolpolyglykolether (8 EO) und 71 Gew.-Teilen paraffinischem Mineralöl (Siedebereich z.B. ca. 255 bis 277° C) mischt und in einer Reibkugelmühle auf eine Feinheit von unter 5 Mikron vermahlt.

d) Ein emulgierbares Konzentrat (EC) wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man 75 Gew.-Teile eines Wirkstoffs/Wirksstoffgemischs,

10 Gew.-Teile ligninsulfonsaures Calcium,
5 Gew.-Teile Natriumlaurylsulfat, 3 Gew.-Teile Polyvinylalkohol und
7 Gew.-Teile Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

Kulturpflanzen wurden im Freiland auf Parzellen von 5 bis 10 $m^2$ Größe auf unterschiedlichen Böden und unter verschiedenen Klimabedingungen herangezogen., wobei das natürliche Vorhandensein von Schadpflanzen beziehungsweise deren Samen im Boden für die Versuche genutzt wurde. Die Behandlung mit den erfindungsgemäßen Mitteln beziehungsweise mit den einzel angewandten Herbiziden A und B erfolgte nach dem Auflaufen der Schad- und der Kulturpflanzen in der Regel im 2- bis 4-Blattstadium. Die Applikation der als WG, WP oder EC formulierten Wirkstoffe oder Wirkstoffkombinationen erfolgte im Nachauflauf. Nach 2 bis 8 Wochen erfolgte eine optische Bonitur im Vergleich zu einer unbehandelten Vergleichsgruppe. Dabei zeigte sich, daß die erfindungsgemäßen Mittel eine synergistische herbizide Wirkung gegen wirtschaftlich bedeutende mono- und dikotyle Schadpflanzen aufweisen, d.h. daß die erfindungsgemäßen Mittel meist eine höhere, teilweise deutlich höhere herbizide Wirkung aufweisen als es der Summe der Wirkungen der Einzelherbizide entspricht. Darüber hinaus liegen die herbiziden Wirkungen der erfindungsgemäßen Mittel über den Erwartungswerten nach Colby. Die Kulturpflanzen wurden hingegen durch die Behandlung nicht oder nur unwesentlich geschädigt.

Wenn die beobachteten Wirkungswerte der Mischungen bereits die formale Summe der Werte zu den Versuchen mit Einzelapplikationen übertreffen, dann übertreffen sie den Erwartungswert nach Colby ebenfalls, der sich nach folgender Formel errechnet (vgl. S. R. Colby; in Weeds 15 (1967) S. 20 bis 22):

$$E = A + B - (A \times B / 100)$$

Dabei bedeuten:

A, B = Wirkung der Komponente A bzw.B in Prozent bei einer Dosierung von a bzw. b Gramm ai /ha.
E = Erwartungswert in % bei einer Dosierung von a+b Gramm ai/ha.

Die beobachteten Werte der nachfolgenden Versuchsbeispiele liegen über den Erwartungswerten nach Colby.

Die Abkürzungen bedeuten:

| | | | |
|---|---|---|---|
| ABUTH | Abutilon theophrasti | BRAPP | Brassica napus |
| ECHCG | Echinocloa crus galli | GALAP | Galium aparine |
| MATCH | Matricaria spec | PAPRH | Papaver rhoeas |
| POLCO | Polygonum convolvulus | SETFA | Setaria faberi |
| AMARE | Amaranthus retroflexus | DIGSA | Digitaria sanguinalis |
| POROL | Portulaca oleracea | SORHA | Sorghum halepense |

In den Beispielen wurden folgende Verbindungen verwendet:

| Komponente | |
|---|---|
| A | 2-[2-Chlor-3-(2,2,2-trifluorethoxymethyl)-4-methylsulfonylbenzoyl]cyclohexan-1,3-dion |
| B | trisulfuron |

## Patentansprüche

**1.** Herbizide Mittel, **gekennzeichnet durch** einen wirksamen Gehalt an

A) der Verbindung 2-[2-Chlor-3-(2,2,2-trifluorethoxymethyl)-4-methylsulfonyl-benzoyl]cyclohexan-1,3-dion sowie deren landwirtschaftlich üblichen Salze (Komponente A)
und
B) triflusulfuron,

wobei diese Mittel die Komponente A oder deren Salze und die Verbindungen der Gruppe B1 in einem Gewichtsverhältnis von 1:2000 bis 2000:1 enthalten.

**2.** Herbizide Mittel nach Anspruch 1, **dadurch gekennzeichnet, daß** das Gewichtsverhältnis A:B der Komponenten A und B im Bereich von 1:20 bis 50:1 liegt.

**3.** Herbizide Mittel nach Anspruch 1 oder 2, **dadurch gekennzeichnet, daß** sie 0,1-99 Gew.-% Komponenten A und B sowie 99 bis 0,1 Gew.-% im Pflanzenschutz übliche Formulierungsmittel enthalten.

**4.** Herbizide Mittel nach einem der Ansprüche 1 bis 3, **dadurch gekennzeichnet, daß** sie eine Verbindung der Formel (I) oder (II) enthalten,

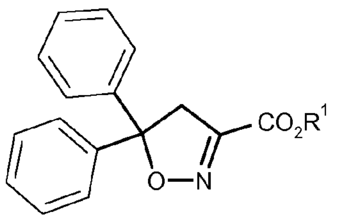

(I)

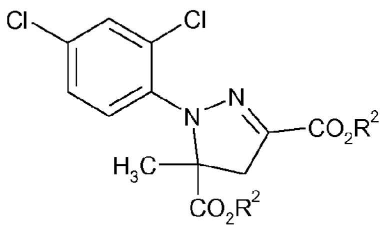

(II)

worin $R^1$ für Wasserstoff , Methyl oder Ethyl steht, und $R^2$ Methyl oder Ethyl bedeutet.

**5.** Verfahren zur Bekämpfung von unerwünschtem Pflanzenwuchs, **dadurch gekennzeichnet, daß** man Komponente A mit einer oder mehreren Komponenten B auf die Schadpflanzen, Pflanzenteile davon oder die Anbaufläche appliziert, wobei die Kombination der Komponenten A und B wie in einem der Ansprüche 1 bis 4 definiert ist.

**6.** Verwendung einer Kombination aus Komponenten A und B als herbizides Mittel zur Bekämpfung von unerwünschtem Pflanzenwuchs, wobei die Kombination der Komponenten A und B wie in einem der Ansprüche 1 bis 4 definiert ist.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9829406 A
- WO 0021924 A
- WO 0128341 A1
- WO 9634528 A1
- WO 9507897 A
- EP 0635996 A


### In der Beschreibung aufgeführte Nicht-Patentliteratur


- The Pesticide Manual. British Crop Protection Council, 2000
- **Winnacker-Küchler.** Chemische Technologie. C. Hauser Verlag München, 1986, vol. 7
- **van Valkenburg.** Pesticides Formulations. Marcel Dekker, 1973
- **K. Martens.** Spray Drying Handbook. G. Goodwin Ltd, 1979
- **Watkins.** Handbook of Insecticide Dust Diluents and Carriers
- **H.v. Olphen.** Introduction to Clay Colloid Chemistry. J. Wiley & Sons
- **Marsden.** Solvents Guide. Interscience, 1950
- **McCutcheon's.** Detergents and Emulsifiers Annual. MC Publ. Corp,
- **Sisley ; Wood.** Encyclopedia of Surface Active Egents. Chem. Publ. Co. Inc,
- **Schönfeldt.** Grenzflächenaktive Äthylenoxidaddukte. Wiss. Verlagsgesellschaft, 1976
- **S. R. Colby.** *Weeds,* 1967, vol. 15, 20-22